(19) Europäisches Patentamt / European Patent Office / Office européen des brevets

(11) **EP 4 282 790 B1**

(12) **EUROPÄISCHE PATENTSCHRIFT**

(45) Veröffentlichungstag und Bekanntmachung des Hinweises auf die Patenterteilung:
**15.07.2026   Patentblatt 2026/29**

(21) Anmeldenummer: **23172298.4**

(22) Anmeldetag: **09.05.2023**

(51) Internationale Patentklassifikation (IPC):
**B65G 1/137** *(2006.01)*       **B65G 1/04** *(2006.01)*

(52) Gemeinsame Patentklassifikation (CPC):
**B65G 1/0457; B65G 1/1378**

(54) **FÖRDERVERFAHREN UND FÖRDERVORRICHTUNG FÜR WAREN MEHRERER AUFTRÄGE**

CONVEYANCE METHOD AND CONVEYANCE DEVICE FOR GOODS OF MULTIPLE JOBS

PROCÉDÉ ET DISPOSITIF DE TRANSPORT POUR MARCHANDISES DE PLUSIEURS TRAVAUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.05.2022   DE 102022205210**

(43) Veröffentlichungstag der Anmeldung:
**29.11.2023   Patentblatt 2023/48**

(73) Patentinhaber: **Dürkopp Fördertechnik GmbH**
**33719 Bielefeld (DE)**

(72) Erfinder:
  • **Sieksmeier, Dirk**
    **32139 Spenge (DE)**
  • **Merten, Markus**
    **33605 Bielefeld (DE)**
  • **Meier, Dirk**
    **32756 Detmold (DE)**
  • **Kleinekathöfer, Axel**
    **33649 Bielefeld (DE)**

  • **Rehm, Pascal**
    **33617 Bielefeld (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 3 666 690        WO-A2-2008/135371**
**CH-A1- 714 004          DE-A1- 102014 115 579**
**KR-B1- 102 330 956      US-A1- 2014 303 770**
**US-A1- 2018 085 788**

  • ZHOU BINGHAI ET AL: "A material handling scheduling method for mixed-model automotive assembly lines based on an improved static kitting strategy", COMPUTERS & INDUSTRIAL ENGINEERING, PERGAMON, AMSTERDAM, NL, vol. 140, 7 January 2020 (2020-01-07), XP086001622, ISSN: 0360-8352, [retrieved on 20200107], DOI: 10.1016/J.CIE.2020.106268

**Beschreibung**

Der Inhalt der deutschen Patentanmeldung DE 10 2022 205 210.2 wird durch Bezugnahme hierin aufgenommen.

Die Erfindung betrifft ein Förderverfahren und eine Fördervorrichtung für Waren mehrerer Aufträge.

US 2014/0303770 A1, das der Oberbegriff des Anspruchs 1 offenbart, offenbart eine Vorrichtung und ein Verfahren zum Zusammenstellen von Gegenständen aus einem Warenlager entsprechend einer bestimmten Sortierung.

CH 714 004 A1 offenbart eine Kommissionieranlage zum Kommissionieren von unterschiedlichen, insbesondere hängend transportierbaren Waren, sowie ein Verfahren zum Betrieb einer solchen Kommisionieranlage.

In einer Fördervorrichtung können Waren mehrerer Aufträge zu mindestens einer Warensenke, insbesondere einem Packplatz, aus einem Umlaufförderer gefördert werden. Der Umlaufförderer weist eine Umlaufzeit auf, innerhalb der eine Ware einen Punkt im Umlaufförderer zweimal passiert. Waren, die einen Auftrag bilden, werden genau einer Warensenke zugeordnet und als Auftragswaren bezeichnet.

Bei einer zufälligen Verteilung der Waren in dem Umlaufförderer ergibt sich eine Bereitstellungszeit, die die Dauer definiert zwischen der Anforderung der Waren an der Warensenke und der Ankunft der letzten Auftragsware an der Warensenke. Je größer der Auftrag ist, also je mehr Waren der Auftrag umfasst, desto größer ist die mittlere Bereitstellungszeit. Die Bereitstellungszeit beeinflusst den Warendurchsatz an der Warensenke, also deren logistische Leistung. Bei einem Auftrag mit nur einer Ware beträgt die mittlere Bereitstellungszeit 50 % der Umlaufzeit. Mit steigender Anzahl der Waren je Auftrag nähert sich die Bereitstellungszeit der Umlaufzeit an. Eine große Bereitstellungszeit beeinträchtigt die logistische Förderleistung der Warensenke und kann zu einer reduzierten Gesamteffizienz der Fördervorrichtung führen.

Es ist die Aufgabe der vorliegenden Erfindung, die mittlere Bereitstellungszeit von Aufträgen mit mehreren Waren zu reduzieren.

Diese Aufgabe ist erfindungsgemäß gelöst durch ein Förderverfahren mit den im Anspruch 1 angegebenen Merkmalen sowie durch eine Fördervorrichtung mit den im Anspruch 10 angegebenen Merkmalen.

Der Kern der Erfindung besteht darin, dass Waren in einem Umlaufförderer mindestens einem Auftrag zugeordnet und als Auftragswaren definiert werden, wobei vollständige Aufträge hinsichtlich ihrer Eignung für eine Zuordnung an eine von mehreren Warensenken automatisiert bewertet werden. Die Warensenken sind fördertechnisch an den Umlaufförderer angeschlossen, insbesondere unmittelbar. Insbesondere ist die jeweilige Position einer Warensenke bezüglich des Umlaufförderers, insbesondere im Umlaufförderer, a priori bekannt. Das Bewerten der Aufträge erfolgt unter Berücksichtigung mindestens einer Eigenschaft der Auftragswaren und/oder der Warensenken. Insbesondere existieren mehrere vollständige Aufträge in dem Umlaufförderer. Insbesondere ist mindestens ein vollständiger Auftrag mit mehreren Warensenken kompatibel. Der mindestens eine vollständige Auftrag ist geeignet, an mehrere Warensenken gefördert zu werden. In Abhängigkeit der Bewertung wird der mindestens eine vollständige Auftrag zu einer der Warensenken logisch zugeordnet, also zugewiesen, und die Auftragswaren des vollständigen Auftrags zu der Warensenke gefördert. Eine Warensenke gilt insbesondere als belegt, wenn ein vollständiger Auftrag dieser Warensenke zugewiesen ist und insbesondere auch dann, wenn die Auftragswaren nicht oder nur teilweise an die Warensenke gefördert worden sind. An eine belegte Warensenke können keine Aufträge zugewiesen oder deren Waren dorthin gefördert werden.

Erfindungsgemäß kann die mittlere Bereitstellungszeit der vollständigen Aufträge reduziert werden. Dadurch kann der Warendurchsatz, insbesondere an den Warensenken, erhöht werden. Eine prozessierbare Warenmenge an den Warensenken ist erhöht. Die Effizienz der Anlage, insbesondere der Warendurchsatz, ist gesteigert. Bei gleicher Anzahl an Warensenken kann eine größere Warenmenge bearbeitet werden. Bei der Bearbeitung einer gleichbleibenden Warenmenge kann die Anzahl der Warensenken in der Fördervorrichtung reduziert werden. Dadurch reduzieren sich die Investitionskosten und die Betriebskosten. Der Platzbedarf für diese Fördervorrichtung ist reduziert.

Die Aufträge umfassen insbesondere jeweils mehrere Waren, wobei auch Aufträge mit nur einer einzigen Ware möglich sind. Die Waren werden insbesondere in Förderbehältnissen entlang einer Warenförderrichtung gefördert. Insbesondere wird genau eine Ware je Förderbehältnis gefördert.

Ein Förderbehältnis ist insbesondere eine Fördertasche, die insbesondere hängend in der Fördervorrichtung transportiert wird. Die Fördervorrichtung ist insbesondere ein Hängeförderer. Eine derartige Fördertasche ist beispielsweise bekannt aus DE 10 2018 201 675 A1 oder aus DE 10 2018 201 676 A1. Alternativ kann die Fördervorrichtung ein Liegeförderer und insbesondere das Förderbehältnis ein Liegewarenbehälter sein, insbesondere eine Kiste oder ein Karton. In diesem Fall ist die Fördervorrichtung ein Liegeförderer, insbesondere ein Gurtförderer oder Bandförderer, insbesondere ein Kippschalensorter, der auch als Split-Tray-Sorter bezeichnet wird und/der ein Quergurtförderer, der auch als Crossbelt-Förderer bezeichnet wird. Insbesondere ist das Förderbehältnis die Verpackung der Ware, insbesondere ein Versandkarton und/oder eine Versandtüte.

Der Umlaufförderer selbst weist eine Pufferfunktion auf und ermöglicht insbesondere eine flexible Zuordnung der Waren im Umlaufförderer an die Warensenken. Da der Umlaufförderer an mehrere Warensenken unmittelbar angeschlossen ist, ist eine starre Warenzuordnung an genau eine Warensenke entbehrlich. Das Verfahren ist flexibel durchführbar.

Das erfindungsgemäße Verfahren eignet sich insbesondere für eine auftragslose Mengenverteilung und/oder eine auftragsgebundene Verteilung, die beispielsweise bei E-Commerce-Aufträgen genutzt wird. Bei der auftragsgebundenen Verteilung wird anstelle von Einzelwaren eine einen Auftrag bildende Warenmenge einer Warensenke zugeordnet. Ein Auftrag umfasst mindestens eine Ware und insbesondere mehrere Waren, wobei es sich insbesondere um verschiedene Waren, also um unterschiedliche Warentypen, handelt. Insbesondere weisen die Warensenken jeweils mehrere Warenplätze auf. Jeder Warenplatz bildet einen Puffer für mindestens eine Auftragsware und insbesondere für mindestens einen Auftrag, der aus mindestens einer Auftragsware und insbesondere aus mehreren Auftragswaren besteht.

Ein Förderverfahren, bei dem die mindestens eine Eigenschaft der Auftragswaren und der Warensenken ein jeweiliger in Warenförderrichtung orientierter Abstand der Auftragswaren zu den Warensenken ist, ermöglicht die Optimierung der mittleren Bereitstellungszeit. Es wurde erkannt, dass der Abstand der Waren zu der jeweiligen Warensenke für die Bestimmung der Bereitstellungszeit maßgeblich ist. Insbesondere ist der jeweilige Abstand einer Auftragsware zu einer Warensenke eine Momentaufnahme. Der Abstand der Auftragswaren zu den Warensenken ist insbesondere eine Funktion der Zeit, insbesondere für den Fall, dass die Auftragswaren kontinuierlich umlaufend in dem Umlaufförderer gefördert werden. Insbesondere erfolgt die Bestimmung des Abstands und die sich daraus ergebende Bewertung der Eignung der Aufträge wiederholt.

Ein Verfahren, bei dem die Bewertung eines vollständigen Auftrags im Umlaufförderer umso höherwertiger ist, je kleiner der Abstand der von der jeweiligen Warensenke am weitest entfernten Auftragsware ist, berücksichtigt die Bereitstellungszeit für die verschiedenen Aufträge zu den unterschiedlichen Warensenken, wobei die jeweilige Bereitstellungszeit sich aus dem jeweiligen Abstand der Auftragsware eines Auftrags ergibt, die am weitesten beabstandet zu der jeweiligen Warensenke angeordnet ist. Ein Auftrag ist umso höher zu bewerten, je kürzer dieser Abstand ist. In diesem Fall ist die Bereitstellungszeit kurz.

Ein Verfahren gemäß Anspruch 2 gewährleistet eine regelmäßige Aktualisierung der Momentaufnahme bei der Bewertung der Eignung der Aufträge. Insbesondere werden die ermittelten Positionen der Auftragswaren an eine logistische Steuerung übermittelt. Dadurch ist sichergestellt, dass beispielsweise neue Waren in dem Umlaufförderer eine neue Zuordnung von Waren zu Aufträgen ermöglichen und/oder neue Auftragslisten gebildet werden können. Eine Zykluszeit für die insbesondere zyklische Positionsermittlung der Auftragswaren beträgt insbesondere höchstens 10 s, insbesondere höchstens 5 s und insbesondere höchstens 1 s. Je kleiner die Zykluszeit ist, desto aktualisierter kann die Bewertung erfolgen.

Ein Förderverfahren gemäß Anspruch 3 ermöglicht eine unkomplizierte und direkte Ermittlung der Position der Auftragswaren. Insbesondere weist der Umlaufförderer eine feste Förderbehältnis-Mitnahme auf, die mittels eines Förderantriebsmittels, insbesondere eine von einem Antriebsmotor angetriebene Antriebskette, realisiert ist. In Abhängigkeit einer relativen Förderposition des Förderantriebsmittels und einer festen Mitnahmeposition eines von dem Förderantriebsmittel geförderten Mitnehmers, einem sogenannten Rolladapter, kann eine feste Mitnahmeposition definiert werden. Die relative Förderposition ist insbesondere eine Drehposition des Antriebsmotors, der mittels eines geeigneten Sensors, insbesondere eines Drehgebers, bestimmbar ist. Die feste Mitnahmeposition kann beim Einschleusen des Mitnehmers in den Umlaufförderer ermittelt werden. Dazu dient insbesondere ein am Mitnehmer befestigter und/oder daran integrierter Signalgeber, insbesondere in Form eines Identifikationsmittels wie beispielsweise ein RFID-Chip. Die in den Förderbehältnissen geförderten Waren sind eindeutig identifizierbar. Dazu weisen die Förderbehältnisse an sich bekannte Identifikationsmittel, insbesondere RFID-Chips und/oder maschinenlesbare Codes, insbesondere Strichcodes oder QR-Codes auf. Entlang einer Warenförderrichtung der Fördervorrichtung sind Lesegeräte angeordnet, die zum Lesen der Identifikationsmittel dienen. Die Förderbehältnisse mit den darin geförderten Waren sind in der Fördervorrichtung nachverfolgbar. Insbesondere kann die Position für jedes Förderbehältnis innerhalb der Fördervorrichtung bestimmt werden.

Ein Förderverfahren gemäß Anspruch 4 ermöglicht die Berücksichtigung weiterer Kriterien bei der Bewertung der Eignung von Auftragswaren für die Zuordnung zu einer Warensenke. Für die Verfügbarkeit einer Warensenke kann beispielsweise ein Zeitpunkt der letzten Zuweisung von Auftragswaren und/oder der aktuelle Füllstand der Warensenke mit Auftragswaren berücksichtigt werden. Dadurch kann vermieden werden, dass Auftragswaren vor einer Warensenke gestaut werden, bis diese Warensenke verfügbar ist. Als Rüstkriterium für eine Warensenke ist zu verstehen, dass eine Warensenke, insbesondere aufgrund konstruktiver und/oder baulicher Gegebenheiten ausschließlich für die Handhabung bestimmter Waren, insbesondere eines bestimmten Maximalvolumens und/oder maximaler äußerer Abmessungen sowie eines bestimmten Maximalgewichts, zugelassen ist.

Ein Verfahren gemäß Anspruch 5 vereinfacht die automatisierte, insbesondere computergestützte, Bewertung der Aufträge.

Ein Förderverfahren gemäß Anspruch 6 ermöglicht die Berücksichtigung ungeeigneter Warensenken für die automatisierte Bewertung von Aufträgen. Dazu dient insbesondere eine separate Kennzahl, die sich insbesondere von Zahlenwerten unterscheidet, die für das Bewerten einzelner Aufträge zugrunde gelegt wird. Derartige Zahlenwerte sind insbesondere ordinal oder metrisch skaliert. Die genannte Kennzahl unterscheidet sich von diesen Zahlenwerten insbesondere dadurch, dass die Kennzahl den Wert "Null" hat oder eine negative Zahl ist.

Ein Förderverfahren gemäß Anspruch 7 vereinfacht die Ermittlung eines Gesamtoptimums für die Abarbeitung mehrerer Aufträge.

Ein Förderverfahren gemäß Anspruch 8 verbessert die Voraussetzungen für eine automatisierte und insbesondere computerimplementierte Durchführung.

Ein Förderverfahren gemäß Anspruch 9 vereinfacht die Abgabe der Auftragswaren an den Warensenken.

Eine Fördervorrichtung gemäß Anspruch 10 weist im Wesentlichen die Vorteile des Förderverfahrens auf, worauf hiermit verwiesen wird. Insbesondere kann jede Warensenke derart ausgeführt sein, dass sie eine oder mehrere Waren empfangen kann. Die Warensenken sind insbesondere als Packplatz ausgeführt. An den Packplätzen werden die Auftragswaren aus dem Umlaufförderer abgegeben und jeweils zu einem Auftrag gepackt, insbesondere in einen Versandbehälter geladen und der Versandbehälter geschlossen. Ein Versandbehälter kann eine Kiste, ein Karton oder eine Tüte sein. An den Packplätzen werden die Waren eines Auftrags für den Versand vorbereitet und insbesondere an einen Warenausgang der Fördervorrichtung als fertig gepackter Auftrag weitergefördert.

Eine Fördervorrichtung gemäß Anspruch 11 ermöglicht eine verbesserte, umlaufende Förderung der Waren in dem Umlaufförderer.

Es ist vorteilhaft, wenn der Umlaufförderer einen ersten Förderstrang und einen zweiten Förderstrang aufweist, wobei nur der erste Förderstrang eine feste Förderbehältnis-Mitnahme aufweist. Der zweite Förderstrang weist keine feste Förderbehältnis-Mitnahme auf. Der zweite Förderstrang hat eine Pufferfunktion. Der zweite Förderstrang dient insbesondere zur Rezirkulation der Waren und insbesondere als Bypass-Strecke in dem Umlaufförderer bezüglich des ersten Förderstrangs. Insbesondere wird der geschlossene Umlaufförderer durch den ersten Förderstrang und den zweiten Förderstrang gebildet. In diesem Fall weist der Umlaufförderer keine weiteren Förderstränge auf.

Es ist auch möglich, dass der Umlaufförderer mehr als zwei Förderstränge aufweist, wobei mehrere erste Förderstränge, also mit fester Förderbehältnis-Mitnahme und/oder mehrere zweite Förderstränge ohne feste Förderbehältnis-Mitnahme vorhanden sein können. Wesentlich ist, dass nur die ersten Förderstränge mit der festen Förderbehältnis-Mitnahme ausgeführt sind. Entsprechend können aber auch mehr als ein Förderstrang, nämlich mehrere erste Förderstränge, jeweils eine feste Förderbehältnis-Mitnahme aufweisen.

Es wurde gefunden, dass mit dem Umlaufförderer und insbesondere mit dem zweiten Förderstrang ohne feste Förderbehältnis-Mitnahme eine Entkopplung der Förderbehältnisse und der Förderbehältnis-Mitnahme ermöglicht ist. Dadurch ist es insbesondere ermöglicht, die Förderbehältnis-se in den Warenstrom des Umlaufförderers mit einstellbarem Abstand einzutakten, also fördertechnisch in den Umlaufförderer aufzugeben. Lücken im, insbesondere rückgeführten, Warenstrom, die insbesondere durch das Abgeben von Waren an den Warensenken entstehen, können durch das zumindest vorübergehende Aufstauen der Waren im zweiten Förderstrang und/oder durch das gezielte Eintakten der Waren von der mindestens einen Warenquelle geschlossen werden. Es gelingt, den Warenstrom nachzuverdichten.

Das Förderbehältnis und ein die Förderbehältnisse antreibender Förderantrieb in dem Umlaufförderer können zumindest abschnittsweise und/oder zumindest zeitweise entkoppelbar, also nicht fest miteinander verbunden sein. Diese Entkopplung erfolgt entlang des zweiten Förderstrangs.

Der Umlaufförderer selbst weist eine Pufferfunktion auf und ermöglicht insbesondere eine flexible Zuordnung der Waren im Umlaufförderer an die Warensenken. Da der Umlaufförderer an mehrere Warensenken unmittelbar angeschlossen ist, ist eine starre Warenzuordnung an genau eine Warensenke entbehrlich. Das Verfahren ist flexibel durchführbar.

Die Förderbehältnis-Mitnahme ist insbesondere durch eine an sich bekannte Förderschiene und eine darin laufende Antriebskette ausgeführt, die mit Mitnehmern zusammenwirkt. Die Mitnehmer sind insbesondere als sogenannte Rolladapter ausgeführt, die in der Förderschiene geführt förderbar sind. Bezüglich der Ausgestaltung und der Funktion derartiger Rolladapter wird ausdrücklich auf die DE 10 2005 006 455 A1 verwiesen. Die Rolladapter ermöglichen eine Koppelbarkeit des Förderbehältnisses mit dem Förderantriebsmittel, also der Antriebskette.

Alternativ kann der erste Förderstrang als Bandförderer oder Gurtförderer ausgeführt sein, der mittels eines an sich bekannten Förderantriebsmittels angetrieben wird. Auf dem Bandförderer oder Gurtförderer werden Liegeförderbehälter transportiert. Auf dem Bandförderer können die Waren unmittelbar, also direkt, oder mittelbar in Transportboxen gefördert werden.

Eine Fördervorrichtung gemäß Anspruch 10 ermöglicht eine verbesserte Pufferfunktion des Umlaufförderers. Insbesondere kann der Warenfluss konsolidiert und insbesondere nachverdichtet werden. Der zweite Förderstrang ermöglicht insbesondere eine Entkopplung der Waren von der festen Förderbehältnis-Mitnahme.

Der zweite Förderstrang kann besonders vorteilhaft und unkompliziert als Schwerkraftförderer ausgeführt sein. Als Schwerkraftförderer ist der zweite Förderstrang gegenüber der horizontalen mit einem Neigungswinkel angeordnet, wobei die Neigung der umlaufenden Warenförderrichtung entspricht. Der Neigungswinkel beträgt insbesondere höchstens 15°, insbesondere höchstens 10°, insbesondere höchstens 8°, insbesondere höchstens 5°, insbesondere höchstens 3° und insbesondere mindestens 1°. Mit dem Schwerkraftförderer werden die Waren selbsttätig entlang des zweiten Förderstrangs schwerkraftbedingt gefördert. Zusätzlich oder alternativ zu der Schwerkraftförderung kann an dem zweiten Förderstrang ein separater Förderantrieb zur maschinell unterstützten Förderung vorhanden sein.

Wenn die Fördervorrichtung ein Hängeförderer ist, kann die Staustrecke insbesondere auch als Power-and-Free-Förderer ausgeführt sein, also insbesondere als Zweischienensystem mit einer oberen Schiene, in der eine Antriebskette läuft, und einer unteren Schiene, in der die Mitnehmer, also Rolladapter, laufen. Die Rolladapter sind in diesem Fall formschlüssig an die Antriebskette gekuppelt und können beliebig ausgeklinkt werden, so dass die Antriebskette kontinuierlich umlaufen kann und die einzelnen Rolladapter dennoch angehalten und/oder ausgeschleust werden können. Ein derartiger Förderer wird auch als Schleppkreisförderer bezeichnet.

Wenn die Fördervorrichtung ein Liegeförderer ist, kann der zweite Förderstrang insbesondere als nach unten geneigte Rampe und/oder Rollbahn ausgeführt sein. Zusätzlich oder alternativ kann ein angetriebenes Förderband vorhanden sein.

Mindestens eine Warenquelle gemäß Anspruch 13 gewährleistet die zuverlässige und flexible Bereitstellung von Waren für den Umlaufförderer.

Sowohl die in den Patentansprüchen angegebenen Merkmale als auch die in dem nachfolgenden Ausführungsbeispiel einer erfindungsgemäßen Fördervorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:

Fig. 1 eine schematische Darstellung einer erfindungsgemäßen Fördervorrichtung,

Fig. 2 eine vergrößerte, teilweise freigeschnittene Seitenansicht eines ersten Förderstrangs eines Umlaufförderers der Fördervorrichtung gemäß Fig. 1 in Form eines Hängeförderers,

Fig. 3 eine Fig. 1 entsprechende Darstellung zur Erläuterung eines automatisierten Bewertens vollständiger Aufträge in dem Umlaufförderer.

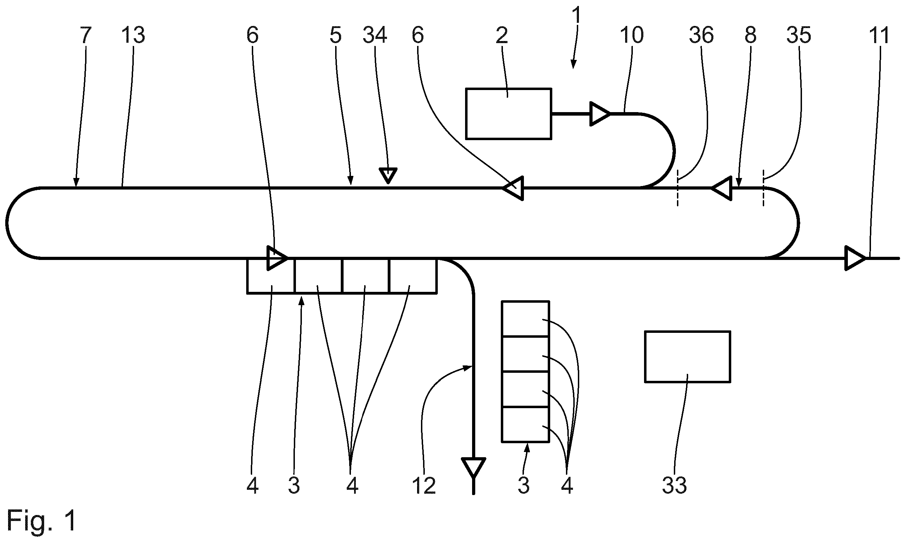

Eine in Fig. 1 rein schematisch dargestellte Fördervorrichtung 1 dient zum Fördern von Waren von mindestens einer Warenquelle 2 an mehrere Warensenken 3. Die Fördervorrichtung kann mehrere Warenquellen 2 umfassen, die insbesondere parallel zueinander angeordnet sind. Jede Warensenke 3 weist insbesondere mehrere Warenabgaben 4 auf, die insbesondere mechanisch voneinander getrennt sind, insbesondere in Form von Trennwänden. Die Warenabgaben 4 an einer Warensenke 3 können auch durch separate Einwurfschächte mit einer insbesondere nach oben geöffneten trichterförmigen Warenaufnahme ausgeführt sein.

Die Warensenken 3 sind insbesondere Packplätze, an welchen Waren eines Auftrags gepackt und insbesondere an einen Warenausgang der Fördervorrichtung 1 für den Versand abgegeben werden können.

Die Warenquelle 2 und die Warensenken 3 sind fördertechnisch mittels eines Umlaufförderers 5 fördertechnisch verbunden. Der Umlaufförderer 5 weist eine endlos umlaufende Förderstrecke auf und ermöglicht eine umlaufende Förderung entlang der Warenförderrichtung 6, die in Fig. 1 durch einen Pfeil symbolisiert ist und in Gegenuhrzeigerrichtung orientiert ist.

Der Umlaufförderer 5 weist einen ersten Förderstrang 7 und einen zweiten Förderstrang 8 auf. An der Warenquelle 2 werden die Waren jeweils in Förderbehältnissen bereitgestellt und mittels der Förderbehältnisse zu den Warensenken 3 gefördert. Die Warensenken 3 sind an die mindestens eine Warenquelle 2 über den ersten Förderstrang 7 insbesondere unmittelbar angeschlossen. Insbesondere ist in jedem Förderbehältnis genau eine Ware angeordnet.

Der erste Förderstrang 7 weist ein nicht näher dargestelltes Förderantriebsmittel auf, das eine feste Förderbehältnis-Mitnahme ermöglicht. Das Förderantriebsmittel umfasst insbesondere einen Antriebsmotor und eine damit mechanisch gekoppelte Antriebskette. Die Antriebskette ist insbesondere innerhalb einer Förderschiene 13 des ersten Förderstrangs 7, insbesondere innerhalb eines Führungsprofils, das insbesondere aus Kunststoff hergestellt ist, geführt angeordnet.

Der erste Förderstrang 7 und der zweite Förderstrang 8 sind an zwei Übergabestellen 35, 36 fördertechnisch miteinander gekoppelt. Die erste Übergabestelle 35 ist in Warenförderrichtung 6 zwischen dem Ende des ersten Förderstrangs 7 und dem Anfang des zweiten Förderstrangs 8 angeordnet. An der ersten Übergabestelle 35 werden die Förderbehältnisse von der festen Förderbehältnis-Mitnahme in dem ersten Förderstrang 7 auf den zweiten Förderstrang 8 ohne feste Förderbehältnis-Mitnahme übergeben. An der zweiten Übergabestelle 36, die in Warenförderrichtung 6 zwischen dem Ende des zweiten Förderstrangs 8 und dem Anfang des ersten Förderstrangs 7 angeordnet ist, werden die Waren von dem zweiten Förderstrang 8 an die feste Förderbehältnis-Mitnahme im ersten Förderstrang 7 aufgegeben.

Die Warenquelle 2 ist über mindestens einen Zuführ-Förderstrang 10 an den Umlaufförderer 5 fördertechnisch angekoppelt, insbesondere strom-abwärts des zweiten Förderstrangs 8 und insbesondere stromabwärts des Förderantriebsmittels.

Der zweite Förderstrang 8 ist insbesondere als Staustrecke und insbesondere als Schwerkraftförderer ausgeführt. Besonders unkompliziert ist die Ausführung als Schwerkraftförderer, der insbesondere gegenüber der horizontalen nach unten geneigt ist. Die Neigung ist insbesondere zu dem ersten Förderstrang 7, insbesondere zu dem Förderantriebsmittel, hin gerichtet. Der zweite Förderstrang 8 weist eine Pufferfunktion auf.

Die Fördervorrichtung 1 umfasst mehrere, insbesondere unterschiedlich ausgeführte, Warensenken 3. Die Warensenken 3 können auch identisch ausgeführt sein. Die Warensenken 3 sind entlang der Warenförderrichtung 6 beabstandet, also hintereinander, angeordnet. Eine erste, in Fig. 1 links dargestellte Warensenke 3 weist eine nicht näher dargestellte Entladeeinheit auf, die ein, insbesondere automatisches, Entladen der Waren aus den Förderbehältnissen ermöglicht. Die erste Warensenke 3 und insbesondere die Abgabefächer 4, sind räumlich benachbart zu dem ersten Förderstrang 7 angeordnet. Die automatische Entladeeinheit kann beispielsweise ein automatisches Öffnen oder Kippen von Fördertaschen und/oder ein automatisches Schwenken oder Kippen von Liegeförderer-Behältern ermöglichen, wobei die Abgabefächer der ersten Warensenken 3 in Abgaberichtung der Waren angeordnet sind. Die erste Warensenke 3 ist also unmittelbar benachbart zu dem ersten Förderstrang 7 angeordnet.

Stromabwärts der Warensenken 3 ist an den Umlaufförderer 5 eine Abführstrecke 11 angeschlossen. Die Abführstrecke 11 dient zum Abführen, insbesondere automatisch, entleerter Förderbehältnisse aus dem Umlaufförderer 5. Die Abführstrecke 11 führt insbesondere zu einer nicht dargestellten Beladestation, an der die Förderbehältnisse mit Waren beladen werden können. Die Abführstrecke 11 kann insbesondere auch mit einem Pufferspeicher verbunden sein, um leere Förderbehältnisse zwischenzuspeichern.

Die Abführstrecke 11 kann entfallen, insbesondere wenn ein automatisches Entleeren der Förderbehältnisse mittels einer Entladeeinheit nicht erfolgt.

Eine in Fig. 1 rechts dargestellte zweite Warensenke 3 ist mittels einer Ausschleuseeinheit 12 an den Umlaufförderer 5, insbesondere an den ersten Förderstrang 7, angeschlossen. Die zweite Warensenke 3 kann räumlich beabstandet zu dem ersten Förderstrang 7 angeordnet sein, wobei eine fördertechnische Verbindung zu dem ersten Förderstrang 7 mittels der Ausschleuseeinheit 12 gewährleistet ist. Die Ausschleuseeinheit 12 ist insbesondere identisch zu der Abführstrecke 11 ausgeführt. Die Ausschleuseeinheit 12 ermöglicht ein gezieltes Ausschleusen von Förderbehältnissen aus dem Umlaufförderer 5 in die Ausschleuseeinheit 12. Im Bereich der zweiten Warensenke 3 werden die Förderbehältnisse mittels eines nicht näher dargestellten Stoppers gestoppt und anschließend insbesondere manuell entladen. Es ist denkbar, dass die Ausschleuseeinheit 12 analog der Abführstrecke 11 zu einer Beladestation führt. Es ist auch denkbar, dass die Ausschleuseeinheit 12 mit der Abführstrecke 11 zusammengeführt oder die Ausschleuseeinheit 12 in die Abführstrecke 11 mündet. Insbesondere können mehrere Ausschleuseeinheiten 12 an den Umlaufförderer angeschlossen sein. Vorteilhaft ist es, wenn für jede zweite Warensenke 3 entweder eine Ausschleuseeinheit 12 oder eine Entladeeinheit vorgesehen ist.

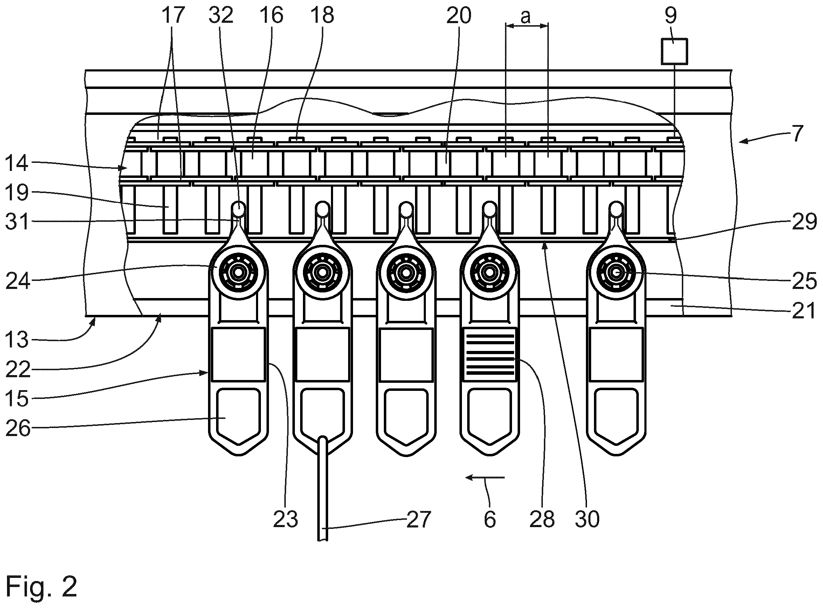

Im Folgenden wird unter Bezugnahme auf Fig. 2 der erste Förderstrang 7 näher erläutert.

Der erste Förderstrang 7 ist als Förderschiene 13 ausgeführt, die auch als Transportschiene bezeichnet wird. Entsprechend ist die Fördervorrichtung 1 ein Hängeförderer. Die Transportschiene 13 ist mittels geeigneter Trageinrichtungen in einem Raum verlegbar. Die Transportschiene 13 ist als Hohlkasten-Profil ausgebildet, in dem eine Antriebskette 14 angeordnet ist und mittels des in Fig. 2 rein schematisch dargestellten Antriebs 9 in Warenförderrichtung 6 antreibbar ist.

Mittels der Antriebskette 14 sind Halteelemente 15 entlang der Transportschiene 13 bewegbar. Die Antriebskette 14 und der Antrieb 9 bilden ein Förderantriebsmittel für den ersten Förderstrang 7. Der Antrieb 9 ist insbesondere ein elektromotorischer Antrieb, der mittels eines Kraftübertragungselements, insbesondere eines Antriebs-Zahnrades, mechanisch mit der Antriebskette 14, also zur Kraftübertragung, gekoppelt ist.

Die Antriebskette 14 ist eine sogenannte Rollen-Kette mit Rollen 16, die in geringem Abstand voneinander mittels Verbindungslaschen 17 miteinander verbunden sind. Bolzen 18 weisen nach unten vorstehende, als Mitnehmer 19 dienende bolzenförmige Verlängerungen auf. Die Bolzen 18 mit den Mitnehmern 19 verlaufen normal zur Transportschiene 13 in einer durch die Warenförderrichtung 6 aufgespannten Vertikalebene.

Die Antriebskette 14 ist in Richtung der Bolzen 18, also senkrecht und quer zur Warenförderrichtung 6 mittels die Verbindungslaschen 17 unter-greifende Führungen 20 in der Transportschiene 13 geführt und gehalten.

Ein Mittenabstand a benachbarter Mitnehmer 19 in der Transportschiene 13 in Warenförderrichtung 6 entspricht exakt der Teilung der Antriebskette 14 und ist insoweit unveränderbar und konstant. Durch die Mitnehmer 19 wird die feste Förderbehältnis-Mitnahme definiert.

An einer Unterseite der Transportschiene 13 sind zwei aufeinander zugerichtete Führungsstege 21 ausgebildet, zwischen denen sich ein in Längsrichtung der Transportschiene 13, also in Warenförderrichtung 6 erstreckender Schlitz 22 ausgebildet ist bzw. begrenzt wird. Durch diesen Schlitz 22 ragt ein flaches Tragteil 23 jedes Halteelements 15 nach unten aus der Transportschiene 13 heraus. In seinem oberen Bereich weist das Halteelement 15 beiderseits des Tragteils 23 je eine Laufrolle 24 auf, die sich jeweils auf einem der beiden Führungsstege 21 abstützt und hierauf in Warenförderrichtung 6 verschiebbar ist. Es ist also nur ein Paar von Laufrollen 24 vorhanden, die um eine gemeinsame Achse 25 drehbar sind, so dass das gesamte Halteelement 15 in der Transportschiene 13 um die Achse 25 pendeln kann.

Das Tragteil 23 weist an seinem unteren Ende eine Aufnahmeöffnung 26 auf, in die ein Förderbehältnis in Form einer Fördertasche 27 einhängbar ist. Die Fördertasche 27 ist in Fig. 2 rein schematisch dargestellt. Das Halteelement 15, das mittels der Laufrollen 24 in der Transportschiene 13 rollen gefördert wird und das mittels der Aufnahmeöffnung 26 zur Aufnahme der Fördertasche 27 geeignet ist, wird auch als Rolladapter bezeichnet.

Das Halteelement 15 weist ein Identifizierungselement 28 auf, das als Transponder, insbesondere RFID-Chip, oder als maschinenlesbarer Code, insbesondere Barcode oder QR-Code, ausgeführt ist. Das Identifizierungselement 28 ist insbesondere zwischen der Aufnahmeöffnung 26 und der Unterseite der Transportschiene 13 angeordnet und damit für ein Lesegerät, insbesondere automatisiert, lesbar. Das Identifizierungselement 28 verläuft entsprechend der Anordnung des plattenartigen Tragteils 23 in Warenförderrichtung 6, liegt also mit seiner Hauptfläche offen quer zur Warenförderrichtung 6, also zur Seite hin.

Die Fördertasche 27 mit einer zu fördernden Ware bleibt nach dem mechanischen Koppeln in das Halteelement 15 während des gesamten Fördervorgangs an diesem Halteelement 15, ist mit diesem also gleichsam "verheiratet". Die zu fördernde Ware wird also gleichsam über das Identifizierungselement 28 und damit das Halteelement 15 gesteuert. Da wiederum der gesamte Transport von der Antriebskette her erfolgt, ist es sehr wichtig, dass ein Halteelement 15 während des Transports eine absolut eindeutige Position relativ zu der Antriebskette 14 einnimmt.

Die Transportschiene 13 weist unmittelbar oberhalb der Laufrollen 24 aufeinander zugerichtete horizontale Begrenzungsstege 29 auf, die zwischen sich einen Schlitz 30 begrenzen. Durch diesen Schlitz 30 erstreckt sich ein stielartiger Ansatz 31 des Halteelements 15, der einstückig mit dem Tragteil 23 an dessen oberen Ende ausgebildet ist.

Am oberen Ende des stilartigen Ansatzes 31 ist ein Anschlag 32 nach Art eines Querriegels ausgebildet ist, dessen Erstreckung horizontal quer zur Warenförderrichtung 6 größer ist als die Breite des Schlitzes 30, so dass bei einem Neigen des Halteelements 15 gegenüber der Transportschiene 13, dieser Anschlag 32 zur Anlage auf den Begrenzungsstegen 29 kommt und somit eine weitere Neigung des Halteelements 15 verhindert. Der Ansatz 31 und der Anschlag 32 haben die Grundform eines Hammers, sind also T-förmig ausgeführt.

Die Mitnehmer 19 der Antriebskette 14 erstrecken sich bis unmittelbar oberhalb der Begrenzungsstege 29, so dass ein zwischen zwei Mitnehmern 19 befindliches Halteelement 15 immer zuverlässig mitgenommen wird, also nicht außer Eingriff mit dem Mitnehmer 19 kommt.

Die Fördervorrichtung 1 weist eine Steuerungseinheit 33 auf, die insbesondere mit der mindestens einen Warenquelle 2, den Warensenken 3, dem Umlaufförderer 5 und/oder den Försträngen 7 und 8 in Signalverbindung steht. Die Signalverbindung kann kabelgebunden oder kabellos erfolgen. Insbesondere steht die Steuerungseinheit 33 mit dem Förderantriebsmittel 9 in Signalverbindung, um ein gezieltes Einschleusen der Fördertaschen 27 von der mindestens einen Warenquelle 2 bzw. ein Rückführen der Fördertaschen 27 aus dem zweiten Förderstrang 8 zu ermöglichen.

Die Steuerungseinheit 33 umfasst insbesondere eine Maschinensteuerung 38 und eine logistische Steuerung 39. Die Maschinensteuerung 38 ist insbesondere als speicherprogrammierbare Steuerung (SPS) ausgeführt. Die logistische Steuerung 39 wird als Warehouse Control System (WCS) bezeichnet.

Die Fördervorrichtung 1 weist mehrere Leseeinheiten 34 auf, wobei mindestens eine Leseeinheit 34 insbesondere entlang des Umlaufförderers 5 angeordnet ist, insbesondere entlang des ersten Förderstrangs 7. Die Leseeinheiten 34 dienen zum Lesen der Identifizierungselemente 28. Da die Fördertaschen 27 entlang des ersten Förderstrangs 7 mit einer festen Förderbehältnis-Mitnahme gefördert werden, kann aus den mittels der Leseeinheiten 34 gelesenen Identifizierungsdaten und einer ermittelten Drehposition eines mit der Antriebskette 14 mechanisch gekoppelten Drehgebers, die jeweilige Position einer Fördertasche 27 innerhalb des Umlaufförderers 5 und insbesondere entlang des ersten Förderstrangs 7 eindeutig bestimmt werden. Für jede Fördertasche 27 ist die genaue Position entlang des ersten Förderstrangs 7 jederzeit bekannt und unveränderlich festgelegt. Die Leseeinheiten 34 ermöglichen zusammen mit dem Drehgeber einen unmittelbaren Rückschluss auf die jeweilige Position der Fördertaschen 27 innerhalb des Umlaufförderers 5, insbesondere entlang des ersten Förderstrangs 7.

Insbesondere steht die Steuerungseinheit 33 mit der Entladeeinheit und/oder mit der Ausschleuseeinheit 12 in Signalverbindung, um ein automatisches Entladen und/oder Ausschleusen der Fördertaschen 27 zu gewährleisten.

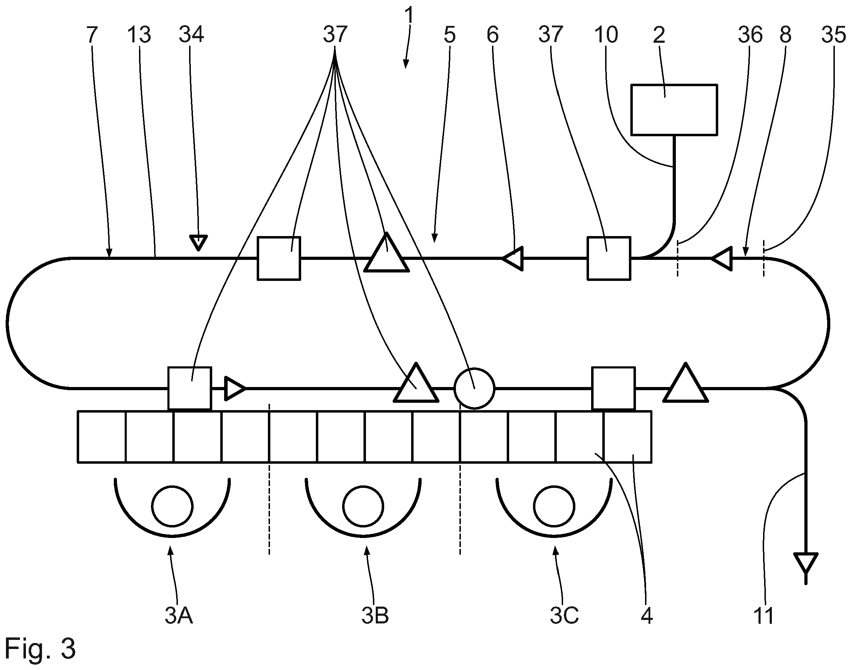

Nachfolgend wird ein Förderverfahren für Waren in der Fördervorrichtung 1 insbesondere anhand von Fig. 3 näher erläutert.

Aus der Warenquelle 2 werden Waren 37 vereinzelt in Fördertaschen 27 in den Umlaufförderer 5 und dort entlang der Warenförderrichtung 6 umlaufend gefördert. An dem Umlaufförderer 5 sind drei Warensenken 3, die insbesondere als Packplätze ausgeführt sind, unmittelbar angeschlossen. An den Warensenken 3 ist jeweils eine Entladeeinheit angeordnet, die ein automatisches, insbesondere schwerkraftbedingtes selbsttätiges Entladen der Förderbehältnisse ermöglicht. Die Warensenken 3 sind jeweils identisch ausgeführt und weisen jeweils vier Warenabgaben 4 auf. Die Warensenken 3 sind zur besseren Unterscheidung für die Erläuterung des nachfolgenden Verfahrens mit den Buchstaben A, B und C gekennzeichnet.

Mittels der Leseeinheit 34, die in Warenförderrichtung 6 vor dem Umlaufförderer 5 angeordnet ist, werden die in den Umlaufförderer 5 zugeführten Förderbehältnisse 27 erfasst. Diese Erfassungsdaten werden an die zentrale Steuerungseinheit 33 übermittelt.

In der Steuerungseinheit 33 ist eine Liste von abzuarbeitenden Aufträgen hinterlegt. Diese Liste stellt einen Bedarf an Aufträgen dar. Jeder Auftrag umfasst mindestens eine Ware 37, die auch als Auftragsware 37 bezeichnet wird.

In der Steuerungseinheit 33 wird der Bedarf an abzuarbeitenden Aufträgen mit den im Umlaufförderer 5 vorhandenen Waren 37 abgeglichen. Die im Umlaufförderer 5 vorhandenen Waren 37 sind den abzuarbeitenden Aufträgen zugeordnet. Diese Zuordnung erfolgt insbesondere vorab in einem logistischen Prozess. Jede Auftragsware 37, die von der mindestens einen Warenquelle 2 in den Umlaufförderer 5 aufgegeben wird, ist zu diesem Zeitpunkt bereits einem Auftrag zugeordnet. Insbesondere erfolgt die Handhabung und Förderung der Auftragswaren 37 auftragsorientiert. Die Handhabung der Auftragswaren und deren Förderung erfolgt in Aufträgen.

Insbesondere werden die Auftragswaren 37 aus der Warenquelle 2 unsortiert und insbesondere quasi zufällig in den Umlaufförderer 5 eingespeist. Quasi zufällig bedeutet, dass insbesondere die Reihenfolge und/oder die Bereitstellungszeit der Auftragswaren 37, die in einem bestimmten Moment von der Warenquelle 2 in den Umlaufförderer 5 umgelagert werden, nicht festgelegt ist und insbesondere durch die Warenquelle 2 selbst vorgegeben wird. Das Ausmaß des Zufalls wird insbesondere durch die Anzahl der gleichzeitig angeforderten Auftragswaren 37 bestimmt, wobei diese Anzahl maximal der Speicherkapazität des Umlaufförderers 5 entspricht. Das Ausmaß des Zufalls kann zusätzlich oder alternativ auch durch die zeitlichen Eigenschaften der Warenquelle 2 bestimmt werden, insbesondere einer Umlaufzeit in der Warenquelle 2, wenn die Warenquelle 2 als kreisender Warenspeicher ausgeführt ist.

In Fig. 3 sind die Waren 37, die ein und demselben Auftrag zugeordnet sind, mit identischen Symbolen gekennzeichnet.

Für die optimierte Zuweisung von vollständigen Aufträgen an die verschiedenen Warensenken 3A, 3B, 3C werden die Aufträge bezüglich ihrer Eignung automatisiert bewertet.

Ein mögliches Bewertungskriterium ist die Bereitstellungszeit für die Auftragswaren zu einer der Warensenken 3A, 3B, 3C. Dazu wird zu einem bestimmten Zeitpunkt der Abstand aller Auftragswaren zu den jeweiligen Warensenken ermittelt, wobei für jeden vollständigen Auftrag jeweils die bezüglich einer Warensenke 3A, 3B, 3C am weitest entfernten Waren 37 maßgeblich sind. Ein vollständiger Auftrag kann an einer Warensenke erst dann abgearbeitet werden, wenn auch die letzte Ware an der Warensenke angekommen ist. Die Bewertung eines vollständigen Auftrags im Umlaufförderer 5 ist umso höherwertiger, je kleiner der Abstand der von der jeweiligen am weitest entfernten Auftragsware ist. Je höher die Eignungszahl ist, desto besser ist die Eignung.

Wenn die Eignungszahl 0 ist, bedeutet dies, dass der jeweilige Auftrag für die jeweilige Warensenke ungeeignet ist. Dies ist beispielsweise dann der Fall, wenn eine Auftragsware aufgrund ihrer Eigenschaft, insbesondere ihres Gewichts oder ihrer Größe, an der bestimmten Warensenke nicht abgegeben werden kann. Es ist auch denkbar, dass ein Auftrag aufgrund von Rüstkriterien, insbesondere wegen der Kundenzuordnung, einer bestimmten Warensenke zugeordnet werden muss. In dem gezeigten Ausführungsbeispiel ist die Warensenke 3A für die dreieckförmigen Auftragswaren 37 ungeeignet, die Warensenke 3B für die viereckigen Auftragswaren 37 ungeeignet und die Warensenke 3C für die viereckigen und kreisförmigen Auftragswaren 37 ungeeignet.

Die Bewertungsergebnisse der vollständigen Aufträge können vorteilhaft und übersichtlich in einer sogenannten Transportmatrix gemäß Tabelle 1 dargestellt werden.

Tabelle 1: Transportmatrix gemäß Fig. 3

| Warensenke / Auftrag | 3A | 3B | 3C |
|---|---|---|---|
| ○ | 2 | 1 | 0 |
| □ | 3 | 0 | 0 |
| △ | 0 | 2 | 1 |

Es ist grundsätzlich möglich, die Zuordnung der vollständigen Aufträge zu den Warensenken 3A, 3B, 3C auf Basis der Transportmatrix durchzuführen. In diesem Fall würde der □-Auftrag der Warensenke 3A zugeordnet, da dies der einzige geeignete Auftrag für diese Warensenke ist. Entsprechend wird der ○-Auftrag der Warensenke 3B zugeordnet. Zwar wäre der Auftrag für die Warensenke 3A besser geeignet als für die Zuordnung zu der Warensenke 3B aufgrund der Bereitstellungszeit. Dadurch kann bei der Zuweisung aller offenen Aufträge zu allen offenen Warensenken 3A, 3B, 3C ein Gesamtoptimum für alle möglichen Paarungen von Auftrag-zu-Warensenke gefunden werden.

Mit der gleichen Erklärung wird der △-Auftrag der Warensenke 3C zugeordnet und dort verarbeitet, auch wenn der △-Auftrag für die Warensenke 3B eine theoretisch bessere Einzel-Eignung hätte. Unter Berücksichtigung des Gesamtoptimums, also für die Gesamteignung, ist die Zuordnung des △-Auftrags für die Warensenke 3B besser.

Die Zuordnung der vollständigen Aufträge an die verschiedenen Warensenken erfolgt derart, dass der durchschnittliche maximale Abstand der Auftragswaren zu den Warensenken minimiert wird. Das bedeutet, dass die Summenbewertung aller Zuordnungen optimiert wird, um insbesondere die Bereitstellungszeit zu minimieren. Berechnungen der Anmelderin haben gezeigt, dass damit die mittlere Bereitstellungszeit für die vollständigen Aufträge und damit insbesondere die Anzahl der erforderlichen Warensenken um ein vorgegebenes Auftragsvolumen abarbeiten zu können, um mindestens 10 % reduziert werden kann.

Mit dem Algorithmus wird insbesondere das Gesamtoptimum derart bestimmt, dass die Summe der Eignungen für zugewiesene Aufträge maximal ist.

Die Bewertung, insbesondere auf Basis des Abstands der Auftragswaren zu den Warensenken, wird insbesondere regelmäßig und insbesondere zyklisch, beispielsweise mit einer Zykluszeit von 1 s, wiederholt. Der Bewertungsvorgang ist dynamisch. Wenn ein Auftrag einer Warensenke zugeordnet worden ist, verschwindet dieser Auftrag aus der Bewertungsmatrix. Wenn neue Waren 37 in dem Umlaufförderer vorhanden und einem vollständigen Auftrag zugeordnet worden sind, werden neue Auftragszeilen in der Bewertungsmatrix generiert. Wenn Warensenken mit einem Auftrag belegt sind, können diese vorübergehend aus der Bewertungsmatrix herausfallen.

Für die Bewertungsmatrix können zusätzlich oder alternativ zu dem Abstand der Auftragswaren zu einer Warensenke auch andere Bewertungskriterien berücksichtigt werden. Die Bewertungskriterien können Eigenschaften des Auftrags selbst und/oder Eigenschaften des Packplatzes, also der jeweiligen Warensenke, sein. Dabei kann es sich um situative Eigenschaften bezüglich des Auftrags und/oder des Packplatzes wie beispielsweise die Kompatibilität des Auftrags bezüglich des Packplatzes, die Position der Auftragswaren im Umlaufförderer 5 und/oder das Alter der Auftragswaren im Umlaufförderer 5 sein. Eigenschaften der Warensenken sind beispielsweise die Priorität eines Abgabefaches 4 innerhalb einer Warensenke 3 und/oder ein Füllstand der Abgabefächer 4. Inhärente Eigenschaften sind bezüglich des Auftrags beispielsweise dessen Priorität oder seine Cut-off-Zeit. Unter der Cut-off-Zeit wird insbesondere ein spätestmöglicher Verarbeitungszeitpunkt eines Auftrags verstanden. Diese Bezeichnung ist insbesondere im Bereich des E-Commerce geläufig. Die Cut-off-Zeit wird insbesondere durch einen Abholtermin gepackter Aufträge aus dem Warenausgang definiert, also insbesondere eine Abholung durch Transportdienstleister wie Deutsche Post, DHL, Hermes etc. Die diesbezüglichen Aufträge müssen vor dem Abholtermin verarbeitet sein. Die Cut-off-Zeit kann, insbesondere in Abhängigkeit des Versenders, der Priorität des Kunden und/oder der gewählten Versandart, insbesondere Expresssendungen, variieren.

Inhärente Eigenschaften für Auftrag und Packplatz sind die sogenannten Rüstkriterien. Rüstkriterien sind beispielsweise die Priorität eines Auftrags und/oder einzelner Auftragswaren, ein Alter des Auftrags, insbesondere dessen Anzahl von Umläufen im Umlaufförderer 5, der Versender, also Transportdienstleister, die Auftragsgröße, insbesondere sogenannte Einpöster, Mehrpöster und/oder Großaufträge, ein Sicherheitslevel wie beispielsweise besonders hochwertige Waren, ein Gefahrenlevel wie beispielsweise Gefahrstoffe, ein Auftragstyp wie beispielsweise E-Commerce oder Einzelhandel, sogenannter Retail, und/oder ein Verpackungstyp wie beispielsweise Karton, Tüte und verschiedene Verpackungsgrößen.

Ausgehend von der Transportmatrix in Tabelle 1 werden die weitere Kriterien, wie vorstehend erläutert, berücksichtigt. Für jedes Kriterium wird eine Einzel-Eignung für jeden Auftrag ermittelt. Diese Einzel-Eignungen werden zu einer Gesamteignung multipliziert. Die Bewertungsmatrix, die die Gesamteignung repräsentiert, ist in Tabelle 2 angegeben.

Tabelle 2: Bewertungsmatrix

| Warensenke / Auftrag | 3A | 3B | 3C |
|---|---|---|---|
| ○ | 0,4 | 0,2 | 0 |
| □ | 0,8 | 0 | 0 |
| △ | 0 | 0,5 | 0,3 |

Insbesondere werden alle Werte in der Bewertungsmatrix normiert, insbesondere derart, dass der höchste Bewertungswert auf 1 gesetzt wird und alle weiteren Bewertungswerte entsprechend normiert werden. In der Bewertungsmatrix weisen alle Felder einen Wert zwischen 0 und 1 auf. Bei dem gezeigten Beispiel verändert sich die Zuordnung der Aufträge zu den Warensenken durch die Bewertungsmatrix gemäß Tabelle 2 gegenüber der Transportmatrix in Tabelle 1 nicht. Gleichwohl ist es vorstellbar, dass durch die Berücksichtigung und der Einzel-Eignungen eine Veränderung der Zuordnung auftreten kann.

Die Bewertungsmatrix kann in eine sogenannte Kostenmatrix transformiert werden. Für die Transformation wird eine fiktive Konstante C für folgende Berechnungsvorschrift verwendet:

$$K_{ij} = C - C \cdot B_{ij}$$

Dabei ist $K_{ij}$ der Wert der Kostenmatrix in der Zeile i und der Spalte j. Entsprechend ist $B_{ij}$ der Wert in der Bewertungsmatrix in der Zeile i und der Spalte j. Gemäß der Berechnungsvorschrift ergeben sich bei der maximalen Eignung von 1 minimale Kosten in Höhe von 0. In dem Sonderfall, dass keine Eignung vorliegt, also $B_{ij} = 0$ gilt, entstehen entsprechend die maximalen Kosten gemäß der fiktiven Konstante C. In diesem Fall erfolgt keine Zuweisung des Auftrags zu dieser Warensenke.

In Tabelle 3 ist die aus der Bewertungsmatrix durch Transformation mit der Konstanten C = 10 erzeugte Kostenmatrix zusammengefasst.

Tabelle 3: Kostenmatrix

| Warensenke / Auftrag | 3A | 3B | 3C |
|---|---|---|---|
| ○ | 6 | 8 | 10 |
| □ | 2 | 10 | 10 |
| △ | 10 | 5 | 7 |

Für die Kostenmatrix wird ein Optimum, insbesondere das globale Optimum, bezüglich der minimalen Kosten gesucht. Dies kann besonders vorteilhaft mit der sogenannten ungarischen Methode, also auf Basis des Kuhn-Munkres-Algorithmus, erfolgen. Es wurde gefunden, dass die Anwendung des Kuhn-Munkres-Algorithmus für eine effiziente und optimierte Lösung der Kostenmatrix besonders vorteilhaft ist.

Andere Algorithmen und/oder Heuristiken sind möglich, wenn sie einen ausreichend hohen Optimierungsgrad aufweisen und sich dem Gesamtoptimum minimaler Kosten jedenfalls annähern. Ein derartiger Algorithmus wird als geeignet erachtet, wenn er zumindest zu 80%, insbesondere zu mindestens 85% und insbesondere zu 90% dem globalen Optimum entspricht. Derartige Algorithmen können vergleichsweise schnell und effizient arbeiten. Beispielhaft können die Vogelsche Approximationsmethode, die MODI-Methode, die auch als modifizierte Distributionsmethode bekannt ist, die Matrix-Minimum-Methode und die Stepping-Stone-Methode genannt werden.

Die Transformation von der Bewertungsmatrix in die Kostenmatrix kann insbesondere auch entfallen, wenn ausgehend von der Bewertungsmatrix ein Algorithmus gewählt wird, um die Gesamtsumme der Eignungen, also der Bewertungswerte, zu maximieren.

**Patentansprüche**

1. Förderverfahren für Waren in einer Fördervorrichtung (1) umfassend die Verfahrensschritte

    - Bereitstellen von Waren (37) für mehrere Aufträge, wobei die Waren (37) in einem Umlaufförderer (5) entlang einer Warenförderrichtung (6) gefördert werden,
    - Erfassen der im Umlaufförderer (5) bereitgestellten Waren (37),
    - Bilden einer Liste vollständiger Aufträge anhand der im Umlaufförderer (5) bereitgestellten Waren (37),
    - Definieren von Auftragswaren (37) als Waren, die in mindestens einem der vollständigen Aufträge enthalten sind,
    - automatisiertes Bewerten der vollständigen Aufträge hinsichtlich ihrer Eignung für eine Zuordnung an eine von mehreren Warensenken (3; 3A, 3B, 3C) unter Berücksichtigung mindestens einer Eigenschaft der Auftragswaren (37) und/oder der Warensenken (3; 3A, 3B, 3C), wobei die Warensenken (3; 3A, 3B, 3C) fördertechnisch an den Umlaufförderer (5) angeschlossen sind,
    - Zuordnen eines vollständigen Auftrags zu einer der Warensenken (3; 3A, 3B, 3C) in Abhängigkeit der Bewertung,
    - Fördern der zugeordneten Auftragswaren (37) zu der Warensenke (3; 3A, 3B, 3C),
    **dadurch gekennzeichnet, dass**
    - die mindestens eine Eigenschaft der Auftragswaren (37) und der Warensenken (3; 3A, 3B, 3C) ein jeweiliger in Warenförderrichtung (6) orientierter Abstand der Auftragswaren (37) zu den Warensenken (3; 3A, 3B, 3C) ist, und
    - die Bewertung eines vollständigen Auftrags im Umlaufförderer (5) umso höherwertiger ist, je kleiner der Abstand der von der jeweiligen Warensenke (3; 3A, 3B, 3C) am weitest entfernten Auftragsware ist.

2. Förderverfahren gemäß Anspruch 1, **dadurch gekennzeichnet, dass** die Positionen der Auftragswaren (37), insbesondere wiederholt, insbesondere zyklisch, ermittelt werden.

3. Förderverfahren gemäß Anspruch 2, **dadurch gekennzeichnet, dass** die Position einer Auftragsware (37) ermittelt wird aus einer relativen Förderposition eines Förderantriebsmittels (14), die insbesondere mittels eines Sensors bestimmt wird, und aus einer festen Mitnahmeposition eines von dem Förderantriebsmittel (14) geförderten Mitnehmers (15), wobei die feste Mitnahmeposition insbesondere bei einem Einschleusen der Auftragsware (37) in den Umlaufförderer (5) ermittelt wird, insbesondere mittels einer mit einem an dem Mitnehmer (15) befestigten und/oder integrierten Signalgeber (23) zusammenwirkenden Leseeinheit (34).

4. Förderverfahren gemäß einem der vorstehenden Ansprüche, **dadurch gekennzeichnet, dass** die mindestens eine Eigenschaft der Auftragswaren (37) und/oder der Warensenken (3; 3A, 3B, 3C) die Verfügbarkeit der Warensenke (3; 3A, 3B, 3C), die Priorisierung von Warensenken (3; 3A, 3B, 3C), insbesondere die Priorisierung von Abgabefächern (4) einer Warensenke (3; 3A, 3B, 3C), die Kompatibilität der Auftragswaren (37) zu den Warensenken (3; 3A, 3B, 3C), die Priorisierung von Aufträgen, insbesondere die Priorisierung von Auftragswaren (37) innerhalb von Aufträgen, ein Rüstkriterium, die Reduzierung nicht bearbeiteter Aufträge im Umlaufförderer (5) und/oder die Reduzierung nicht verwendeter Auftragswaren (37) im Umlaufförderer (5) ist.

5. Förderverfahren gemäß einem der vorstehenden Ansprüche, **dadurch gekennzeichnet, dass** das Bewerten der Aufträge anhand einer Transportmatrix erfolgt, wobei die Transportmatrix Spalten und Zeilen umfasst, wobei insbesondere die Zeilen die verschiedenen Aufträge und die Spalten die verschiedenen Warensenken (3A, 3B, 3C) symbolisieren.

6. Förderverfahren gemäß Anspruch 5, **dadurch gekennzeichnet, dass** beim Bewerten jedem Auftrag ein Zahlenwert, insbesondere ordinal oder metrisch skaliert, zugeordnet wird, wobei insbesondere einem Auftrag eine separate Kennzahl zugeordnet wird, wenn dieser Auftrag für die jeweilige Warensenke (3A, 3B, 3C) ungeeignet ist.

7. Förderverfahren gemäß Anspruch 5 oder 6, **gekennzeichnet durch** ein Transformieren der Transportmatrix in eine Kostenmatrix, insbesondere durch Multiplikation von Einzelbewertungen jedes Auftrags und/oder durch Multiplikation von Einzelkosten und/oder Anwendung des Kuhn-Munkres-Algorithmus.

8. Förderverfahren gemäß einem der vorstehenden Ansprüche, **gekennzeichnet durch** ein automatisiertes und insbesondere vollautomatisches Durchführen des Verfahrens, insbesondere mittels einer Maschinensteuerung (38) für den Umlaufförderer (5) und/oder mittels einer logistischen Steuerung (39) für eine Positionsdefinition der Warensenken (3; 3A, 3B, 3C).

9. Förderverfahren gemäß einem der vorstehenden Ansprüche, **dadurch gekennzeichnet, dass** die Auftragswaren (37) an den Warensenken (3; 3A, 3B, 3C) abgegeben werden, insbesondere durch ein, insbesondere automatisches, Entladen der Auftragswaren (37) aus Förderbehältnissen (27) mittels einer Entladeeinheit und/oder durch ein Ausschleusen der die Auftragswaren (37) fördernden Förderbehältnisse (27) an der zugeordneten Warensenke (3) mittels einer Ausschleuseeinheit (12).

10. Fördervorrichtung für Waren mehrerer Aufträge umfassend

   a. einen geschlossenen Umlaufförderer (5), mit dem die Waren (37) endlos umlaufend gefördert werden,
   b. entlang einer Warenförderrichtung (6) der Fördervorrichtung (1) angeordnete Lesegeräte (34) zum Lesen von Identifikationsmitteln von Förderbehältnissen (27), in welchen die Waren (37) gefördert werden,
   c. mehrere an den Umlaufförderer (5) fördertechnisch gekoppelte Warensenken (3; 3A, 3B, 3C), zu welchen die Waren als Auftragswaren (37) gefördert werden,
   d. eine Steuerungseinheit (33), die dazu ausgeführt ist, ein Förderverfahren gemäß einem der vorstehenden Ansprüche für die Waren (37) in der Fördervorrichtung (1) auszuführen.

11. Fördervorrichtung gemäß Anspruch 10, **dadurch gekennzeichnet, dass** der Umlaufförderer (5) einen erste Förderstrang (7) mit einer festen Förderbehältnis-Mitnahme aufweist, wobei der erste Förderstrang (7) an die Warensenken (3; 3A, 3B, 3C), insbesondere unmittelbar, angeschlossen ist, und/oder wobei der erste Förderstrang (7) ein Förderantriebsmittel (14) zur festen Förderbehältnis-Mitnahme aufweist, insbesondere eine in einer Förderschiene (13) laufende Antriebskette (14) und damit zusammenwirkende Mitnehmer (15), die jeweils mit einem Förderbehältnis (27) koppelbar sind.

12. Fördervorrichtung gemäß einem der Ansprüche 10 bis 11, **dadurch gekennzeichnet, dass** der Umlaufförderer (5) einen zweiten Förderstrang (8) ohne feste Förderbehältnis-Mitnahme aufweist, wobei der zweite Förderstrang (8) mit dem ersten Förderstrang (7) den geschlossenen Umlaufförderer (5) bildet.

13. Fördervorrichtung gemäß einem der Ansprüche 10 bis 12, **gekennzeichnet durch** mindestens eine Warenquelle (2), die die Waren (37) in den Förderbehältnissen (27) bereitstellt.

**Claims**

1. A conveying method for goods in a conveying apparatus (1), comprising the method steps of

   - providing goods (37) for multiple orders, wherein the goods (37) are conveyed in an endless conveyor (5) along a goods conveying direction (6),
   - detecting the goods (37) provided in the endless conveyor (5),
   - forming a list of complete orders on the basis of the goods (37) provided in the endless conveyor (5),
   - defining ordered goods (37) as goods included in at least one of the complete orders,
   - automated evaluation of the complete orders with regard to their suitability for allocation to one of multiple goods sinks (3; 3A, 3B, 3C), taking into account at least one characteristic of the ordered goods (37) and/or of the goods sinks (3; 3A, 3B, 3C), wherein the goods sinks (3; 3A, 3B, 3C) are connected to the endless conveyor (5) in terms of conveying technology,
   - allocating a complete order to one of the goods sinks (3; 3A, 3B, 3C) depending on the evaluation,
   - conveying the allocated ordered goods (37) to the goods sink (3; 3A, 3B, 3C),
   **characterized in that**
   - the at least one characteristic of the ordered goods (37) and the goods sinks (3; 3A, 3B, 3C) is a respective distance of the ordered goods (37) from the goods sinks (3; 3A, 3B, 3C) which is oriented in the goods conveying direction (6), and
- the smaller the distance of the ordered goods that are furthest away from the respective goods sink (3; 3A, 3B, 3C), the higher the evaluation of a complete order in the endless conveyor (5).

2. A conveying method according to claim 1, **characterized in that** the positions of the ordered goods (37) are determined, in particular repeatedly, in particular cyclically.

3. A conveying method according to claim 2, **characterized in that** the position of an ordered product (37) is determined from a relative conveying position of a conveying drive means (14), which is determined in particular by means of a sensor, and from a fixed entrainment position of an entrainer (15) that is conveyed by the conveying drive means (14), wherein the fixed entrainment position is determined in particular when the ordered product (37) is introduced into the endless conveyor (5), in particular by means of a reading unit (34) that cooperates with a signal transmitter (23) that is attached to and/or integrated in the entrainer (15).

4. A conveying method according to any one of the preceding claims, **characterized in that** the at least one characteristic of the ordered goods (37) and/or the goods sinks (3; 3A, 3B, 3C) is the availability of the goods sink (3; 3A, 3B, 3C), the prioritization of goods sinks (3; 3A, 3B, 3C), in particular the prioritization of discharge compartments (4) of a goods sink (3; 3A, 3B, 3C), the compatibility of the ordered goods (37) with the goods sinks (3; 3A, 3B, 3C), the prioritization of orders, in particular the prioritization of ordered goods (37) within orders, a setup criterion, the reduction of unprocessed orders in the endless conveyor (5) and/or the reduction of unused ordered goods (37) in the endless conveyor (5).

5. A conveying method according to any one of the preceding claims, **characterized in that** the orders are evaluated on the basis of a transport matrix, wherein the transport matrix comprises columns and rows, wherein in particular the rows symbolize the different orders and the columns symbolize the different goods sinks (3A, 3B, 3C).

6. A conveying method according to claim 5, **characterized in that** a numerical value, in particular ordinally or metrically scaled, is assigned to each order during the evaluation, wherein in particular a separate identification number is assigned to an order if this order is unsuitable for the respective goods sink (3A, 3B, 3C).

7. A conveying method according to claim 5 or 6, **characterized by** transforming the transport matrix into a cost matrix, in particular by multiplying individual evaluations of each order and/or by multiplying individual costs and/or applying the Kuhn-Munkres algorithm.

8. A conveying method according to any one of the preceding claims, **characterized by** an automated and in particular fully automated execution of the method, in particular by means of a machine control system (38) for the endless conveyor (5) and/or by means of a logistic control system (39) for a position definition of the goods sinks (3; 3A, 3B, 3C).

9. A conveying method according to any one of the preceding claims, **characterized in that** the ordered goods (37) are delivered to the goods sinks (3; 3A, 3B, 3C), in particular by unloading, in particular automatically, the ordered goods (37) from conveyor containers (27) by means of an unloading unit and/or by discharging the conveyor containers (27) that convey the ordered goods (37) at the assigned goods sink (3) by means of a discharge unit (12).

10. A conveying apparatus for goods of multiple orders comprising

    a. a closed endless conveyor (5) by means of which the goods (37) are conveyed in endless circulation,
    b. reading devices (34) arranged along a goods conveying direction (6) of the conveying apparatus (1), which serve to read the identification means of conveyor containers (27) in which the goods (37) are conveyed,
    c. a plurality of goods sinks (3; 3A, 3B, 3C) which are coupled to the endless conveyor (5) in terms of conveying technology and to which the goods (37) are conveyed as ordered goods,
    d. a control unit (33) which is designed to carry out a conveying method according to any one of the preceding claims for the goods (37) in the conveying apparatus (1).

11. A conveying apparatus according to claim 10, **characterized in that** the endless conveyor (5) has a first conveyor strand (7) with a fixed conveyor container entrainment, wherein the first conveyor strand (7) is connected to the goods sinks (3; 3A, 3B, 3C), in particular directly, and/or wherein the first conveyor strand (7) has a conveyor drive means (14) for the fixed conveyor container entrainment, in particular a drive chain (14) which runs in a conveyor rail (13), and entrainers (15) which cooperate therewith and which can be coupled in each case to a conveyor container (27).

12. A conveying apparatus according to any one of claims 10 to 11, **characterized in that** the endless conveyor (5) has a second conveyor strand (8) without fixed conveyor container entrainment, wherein the second conveyor strand (8) together with the first conveyor strand (7) forms the closed endless conveyor (5).

13. A conveying apparatus according to any one of claims 10 to 12, **characterized by** at least one goods source (2) which provides the goods (37) in the conveyor containers (27).

**Revendications**

1. Procédé de transport de marchandises dans un dispositif de transport (1) comprenant les étapes suivantes :

   - mise à disposition de marchandises (37) pour plusieurs commandes, les marchandises (37) étant transportées dans un convoyeur circulaire (5) le long d'une direction de transport de marchandises (6),
   - détection des marchandises (37) mises à disposition dans le convoyeur circulaire (5),
   - création d'une liste de commandes complètes à partir des marchandises (37) mises à disposition dans le convoyeur circulaire (5),
   - définition de marchandises de commande (37) en tant que marchandises contenues dans au moins une des commandes complètes,
   - évaluation automatisée des commandes complètes quant à leur aptitude à être attribuées à l'un de plusieurs réceptacles de marchandises (3 ; 3A, 3B, 3C) en tenant compte d'au moins une propriété des marchandises de commande (37) et/ou des réceptacles de marchandises (3 ; 3A, 3B, 3C), les réceptacles de marchandises (3 ; 3A, 3B, 3C) étant reliés au convoyeur circulaire (5) par des moyens techniques de transport,
   - attribution d'une commande complète à l'un des réceptacles de marchandises (3 ; 3A, 3B, 3C) en fonction de l'évaluation,
   - transport des marchandises de commande attribuées (37) vers le réceptacle de marchandises (3 ; 3A, 3B, 3C), **caractérisé en ce**
   - **que** ladite au moins une propriété des marchandises de commande (37) et des réceptacles de marchandises (3 ; 3A, 3B, 3C) est une distance respective des marchandises de commande (37) par rapport aux réceptacles de marchandises (3 ; 3A, 3B, 3C), orientée dans la direction de transport de marchandises (6), et que
   - l'évaluation d'une commande complète dans le convoyeur circulaire (5) est d'autant meilleure que la distance entre le réceptacle de marchandises respectif (3 ; 3A, 3B, 3C) et la marchandise de commande la plus éloignée est plus petite.

2. Procédé de transport selon la revendication 1, **caractérisé en ce que** les positions des marchandises de commande (37) sont déterminées, en particulier de manière répétée, en particulier de manière cyclique.

3. Procédé de transport selon la revendication 2, **caractérisé en ce que** la position d'une marchandise de commande (37) est déterminée à partir d'une position de transport relative d'un moyen d'entraînement de transport (14), qui est déterminée en particulier au moyen d'un capteur, et à partir d'une position d'entraînement fixe d'un entraîneur (15) transporté par le moyen d'entraînement de transport (14), la position d'entraînement fixe étant déterminée en particulier lors de l'introduction de la marchandise de commande (37) dans le convoyeur circulaire (5), en particulier au moyen d'une unité de lecture (34) coopérant avec un générateur de signaux (23) fixé et/ou intégré à l'entraîneur (15).

4. Procédé de transport selon l'une des revendications précédentes, **caractérisé en ce que** ladite au moins une propriété des marchandises de commande (37) et/ou des réceptacles de marchandises (3 ; 3A, 3B, 3C) est la disponibilité du réceptacle de marchandises (3 ; 3A, 3B, 3C), la priorisation des réceptacles de marchandises (3 ; 3A, 3B, 3C), en particulier la priorisation de compartiments de distribution (4) d'un réceptacle de marchandises (3 ; 3A, 3B, 3C), la compatibilité des marchandises de commande (37) avec les réceptacles de marchandises (3 ; 3A, 3B, 3C), la priorisation des commandes, en particulier la priorisation des marchandises de commande (37) au sein des commandes, un critère de préparation, la réduction des commandes non traitées dans le convoyeur circulaire (5), et/ou la réduction des marchandises de commande non utilisées (37) dans le convoyeur circulaire (5).

5. Procédé de transport selon l'une des revendications précédentes, **caractérisé en ce que** l'évaluation des commandes s'effectue à l'aide d'une matrice de transport, la matrice de transport comprenant des colonnes et des lignes, les lignes symbolisant en particulier les différentes commandes et les colonnes les différents réceptacles de marchandises (3A, 3B, 3C).

6. Procédé de transport selon la revendication 5, **caractérisé en ce que**, lors de l'évaluation, une valeur numérique, en particulier à une échelle ordinale ou métrique, est attribuée à chaque commande, un indice distinct étant en particulier attribué à une commande lorsque celle-ci n'est pas adaptée au réceptacle de marchandises (3A, 3B, 3C) respectif.

7. Procédé de transport selon la revendication 5 ou 6, **caractérisé par** une transformation de la matrice de transport en une matrice de coûts, en particulier par multiplication des évaluations individuelles de chaque commande et/ou par multiplication des coûts individuels et/ou application de l'algorithme de Kuhn-Munkres.

8. Procédé de transport selon l'une des revendications précédentes, **caractérisé par** une exécution automatisée et en particulier entièrement automatique du procédé, en particulier au moyen d'une commande de machine (38) pour le convoyeur circulaire (5) et/ou au moyen d'une commande logistique (39) pour une définition de position des réceptacles de marchandises (3 ; 3A, 3B, 3C).

9. Procédé de transport selon l'une des revendications précédentes, **caractérisé en ce que** les marchandises de commande (37) sont distribuées aux réceptacles de marchandises (3 ; 3A, 3B, 3C), en particulier par un déchargement, en particulier automatique, des marchandises de commande (37) à partir de conteneurs de transport (27) au moyen d'une unité de déchargement et/ou par une évacuation des conteneurs de transport (27) transportant les marchandises de commande (37) au niveau du réceptacle de marchandises attribué (3) au moyen d'une unité d'évacuation (12).

10. Dispositif de transport de marchandises de plusieurs commandes, comprenant :

    a. un convoyeur circulaire fermé (5) avec lequel les marchandises (37) sont transportées en boucle continue,
    b. des lecteurs (34) disposés le long d'une direction de transport de marchandises (6) du dispositif de transport (1) pour lire des moyens d'identification de conteneurs de transport (27) dans lesquels les marchandises (37) sont transportées,
    c. plusieurs réceptacles de marchandises (3 ; 3A, 3B, 3C) couplés au convoyeur circulaire (5) par des moyens techniques de transport (3 ; 3A, 3B, 3C), vers lesquels les marchandises sont transportées en tant que marchandises de commande (37),
    d. une unité de commande (33) conçue pour exécuter un procédé de transport selon l'une des revendications précédentes pour les marchandises (37) dans le dispositif de transport (1).

11. Dispositif de transport selon la revendication 10, **caractérisé en ce que** le convoyeur circulaire (5) présente une première ligne de transport (7) avec un entraînement fixe de conteneurs de transport, la première ligne de transport (7) étant raccordée aux réceptacles de marchandises (3 ; 3A, 3B, 3C), en particulier directement, et/ou la première ligne de transport (7) présentant un moyen d'entraînement de transport (14) pour l'entraînement fixe de conteneurs de transport, en particulier une chaîne d'entraînement (14) circulant dans un rail de transport (13) (14) et des entraîneurs (15) coopérant avec celle-ci, qui peuvent être couplés chacun à un conteneur de transport (27).

12. Dispositif de transport selon l'une des revendications 10 à 11, **caractérisé en ce que** le convoyeur circulaire (5) présente une deuxième ligne de transport (8) sans entraînement fixe de conteneurs de transport, la deuxième ligne de transport (8) formant avec la première ligne de transport (7) le convoyeur circulaire fermé (5).

13. Dispositif de transport selon l'une des revendications 10 à 12, **caractérisé par** au moins une source de marchandises (2) qui met à disposition les marchandises (37) dans les conteneurs de transport (27).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022205210
- US 20140303770 A1
- CH 714004 A1
- DE 102018201675 A1
- DE 102018201676 A1
- DE 102005006455 A1